# FASCICULE DE BREVET EUROPEEN

(11) **EP 3 356 429 B1**
(45) Date de publication et mention de la délivrance du brevet: **11.09.2019**
(21) Numéro de dépôt: 16785243.3
(22) Date de dépôt: 29.09.2016
(51) Int. Cl.: C08F 110/02, C08F 4/38, C08F 2/38, C08F 2/00

(54) **POLYMÉRISATION RADICALAIRE DE L'ÉTHYLÈNE AMORCÉE PAR UN COUPLE DE PEROXYDES ORGANIQUES À HAUTE PRODUCTIVITÉ**
DURCH EIN PAAR ORGANISCHER PEROXIDE MIT HOHER PRODUKTIVITÄT INITIIERTE RADIKALISCHE POLYMERISATION VON ETHYLEN
RADICAL POLYMERISATION OF ETHYLENE INITIATED BY A COUPLE OF ORGANIC PEROXIDES WITH HIGH PRODUCTIVITY

(30) Priorité: 29.09.2015 FR 1559145
(43) Date de publication de la demande: 08.08.2018
(73) Titulaire: Arkema France, 92700 Colombes (FR)
(72) Inventeur: VAN HEMELRYCK, Bruno, 69630 Chaponost (FR); HUB, Serge, 69100 Villeurbanne (FR); LAURICHESSE, Christian, 64140 Lons (FR); BERSON, Anne, 64110 Laroin (FR)
(74) Mandataire: Gorintin, Sarah
(86) Numéro de dépôt international: PCT/FR2016/052470
(87) Numéro de publication internationale: WO 2017/055748

(56) Documents cités:
- EP-A2- 0 259 537
- WO-A1-2012/107689
- DATABASE Chemical Abstracts, Chemi [Online] 24 juillet 1967 (1967-07-24), SERGETA T V ET AL: "Peroxide initiators of ethylene polymerization under high pressures", XP002089452, extrait de CHEMICAL Database accession no. 11761

## Description

### Domaine de l'invention

La présente invention se rapporte à un procédé de fabrication de polyéthylène ou d'un copolymère de l'éthylène par polymérisation sous haute pression (autoclave ou tubulaire) en présence d'un couple d'initiateurs de polymérisation peroxydique particulier dans une large gamme de température.

### Etat de l'art

Les polyéthylènes basse densité et les copolymères de l'éthylène sont généralement fabriqués dans un réacteur autoclave ou tubulaire sous très haute pression, par introduction en continu d'éthylène, d'un ou plusieurs comonomères éventuels et d'un ou plusieurs initiateurs peroxydes organiques généralement dilués dans un solvant organique. La pression à l'intérieur du réacteur est généralement comprise entre 500 et 5000 bars. La température lors de l'initiation de la réaction est généralement comprise entre 80 et 250°C (degré Celsius). La température maximale de réaction est généralement comprise entre 120 et 350°C.

Le taux de conversion en polymère généralement obtenu avec ce type de procédé est de l'ordre de 15 à 25%. De la même façon, la productivité d'un tel procédé, exprimée en grammes de polyéthylène produit par gramme d'initiateur peroxyde utilisé, est généralement comprise entre 1000 et 3000 g/g, et plus généralement inférieure à 2500 g/g.

La recherche de gain de productivité et donc de coût est une préoccupation constante des producteurs de polyéthylène. Il existe un besoin de disposer d'un procédé de fabrication de polyéthylène qui présente une productivité élevée, tout en conservant un taux de conversion en polymère intéressant.

On connait du document US 2650913 un procédé de polymérisation de l'éthylène en présence d'un initiateur 2,2-bis-(tertiary butyl peroxy) butane mais cet initiateur conduit à une productivité faible (cf. exemple 1 de ce document et essai 3 ci-dessous).

On connait également le document FR 2946653 qui divulgue le 2,2-di-(t-amyl peroxy)propane mais celui-ci n'est absolument pas utilisé en tant qu'initiateur.

On connaît par ailleurs les documents US 2008/0226891, EP 0273090 et EP 0259537 qui divulguent l'utilisation du 2,2-di-(t-amyl peroxy)butane mais ce dernier est utilisé pour la fabrication de polymères très distinct des polymères d'éthylène ou copolymères d'éthylène.

On connait enfin le document EP 2673307, déposé au nom de la demanderesse, dans lequel il a été montré que certains peroxydes organiques de type diperketals permettaient d'augmenter la productivité du procédé à des valeurs supérieures à 3000 g/g pour une gamme de température d'initiation particulière, comprise entre 150 et 200°C. Ce document illustre par ses exemples l'intérêt particulier du 2,2-di(tertio-amylperoxy)butane (dilué à 50% dans l'isododécane connu sous forme commerciale sous l'appellation Luperox® 520M50) comme amorceur de haute productivité du LDPE (« Low Density PolyEthylene »).

L'initiateur peroxydique susvisé donne satisfaction car il améliore la productivité et la recherche de gain en productivité est un objectif majeur des producteurs de résines polyéthylènes.

Néanmoins, il est souhaitable de proposer une amélioration encore plus conséquente de la productivité.

### Résumé de l'invention

Contrairement à ce qui pouvait être anticipé par l'homme du métier, la demanderesse a découvert de façon surprenante que l'utilisation d'un couple de peroxydes organiques diperketals de formule 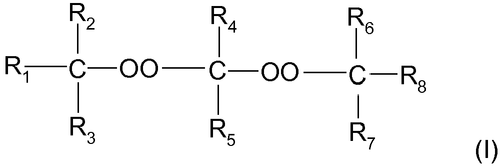 les groupes R consistant essentiellement en des groupes alkyles en C1-C6, ces deux peroxydes présentant une Température de Demi-vie à une minute comprise entre 150°C et 185°C, permettait de diminuer la consommation spécifique (masse de polymère produit par gramme de peroxydes injectés) en peroxyde utilisé dans la plage de température d'initiation 140°C-200°C.

Il en découle la possibilité d'obtenir des productivités supérieures ou égales à 3000 g/g pour une gamme de température d'initiation comprise entre 140°C et 200°C classiquement utilisée pour ce type de procédé et d'augmenter la productivité à haute température réactionnelle (température de polymérisation) entre 200°C et 290°C pour un meilleur enchaînement thermique d'amorçage, c'est-à-dire une meilleure productivité avec les peroxydes permettant d'atteindre de très haute températures (Tₘₐₓ = température maximale atteinte par l'exotherme de polymérisation), typiquement 295-305°C, tel qu'avec le di-tert-butyl peroxyde.

Ainsi la présente invention concerne un procédé de fabrication de polyéthylène ou d'un copolymère de l'éthylène, comprenant une étape de polymérisation ou copolymérisation radicalaire de l'éthylène en présence :
- d'un premier initiateur de polymérisation peroxydique choisi parmi les composés peroxydes diperketals de formule : 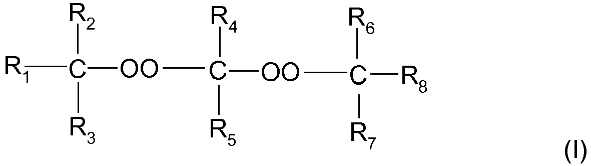 où les groupes R₁, R₂, R₃, R₆, R₇ et R₈ consistent en des groupes alkyles en C1-C10, substitué ou non, linéaire, ramifié ou cyclique,
- d'un second initiateur, différent dudit premier initiateur, consistant également en un peroxyde diperketal de formule (I).

En particulier, la présente invention se rapporte à un procédé de fabrication de polyéthylène ou d'un copolymère de l'éthylène par introduction en continu d'éthylène et d'éventuel(s) comonomère(s) dans un réacteur tubulaire ou autoclave, comprenant une étape de polymérisation ou copolymérisation radicalaire de l'éthylène à une température d'initiation variant de 140°C à 200°C, à une pression variant de 1200 à 3000 bars, en présence d'un premier initiateur de polymérisation peroxydique choisi parmi les composés peroxydes diperketals de formule 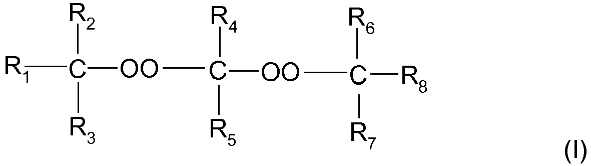 où les groupes R₁, R₂, R₃, R₆, R₇ et R₈ consistent en des groups alkyles en C1-C6,
caractérisé en ce qu'un second initiateur, consistant également en un peroxyde diperketal de formule (I), est présent lors de la susdite étape, les premier et second peroxydes, formant un mélange de peroxydes, présentant une Température de Demi-vie à une minute comprise entre 150°C et 185°C telle que mesurée dans le n-dodécane à la concentration de 0,1 mole par litre (mol.l⁻¹) à l'aide d'une courbe de calorimètre à balayage différentiel (DSC).

La détermination de la température de demi-vie peut être réalisée simplement à partir des données DSC servant à caractériser la stabilité thermique des peroxydes en question. Ladite température de demi-vie à une minute est mesurée dans le n-dodécane à la concentration de 0,1 mole par litre (mol.l⁻¹) à l'aide d'une courbe de calorimètre à balayage différentiel (DSC).

La courbe thermocinétique de décomposition enregistrée par cette technique permet d'obtenir les paramètres cinétiques relatifs à la décomposition thermique des substances instables suivant une équation de décomposition de type Arrhenius.

Dans le cas d'un traitement selon une cinétique d'ordre n, les trois paramètres k₀ (facteur pré-exponentiel), Eₐ (énergie d'activation) et n (ordre de la réaction de décomposition) sont liés et optimisés de manière à minimiser les écarts entre le modèle et la courbe expérimentale.

La température de demi-vie T est la température à laquelle, au bout du temps t, la quantité de matière thermiquement instable restant est égale à la moitié de la quantité initiale.

Il convient de noter que, dans la suite, l'expression « Température de Demi-vie à une minute » s'entend toujours dans le cadre d'une mesure réalisée dans le n-dodécane à la concentration de 0,1 mole par litre (mol.l⁻¹).

L'expression « groupe alkyle en C1-C10 », de préférence « groupe alkyle en C1-C6» , signifie qu'il s'agit d'un groupe dérivé d'alcane, substitué ou non, linéaire ramifié ou cyclique, comportant au moins un (1) atome de carbone et jusqu'à dix (10), de préférence jusqu'à six (6) atomes de carbone. Il s'agit classiquement, pour les structures non ramifiées, par exemple des groupes méthyle, éthyle, n-propyle, n-butyle, n-pentyle ou n-hexyle.

Selon un mode de réalisation, l'invention est par ailleurs particulièrement améliorée lorsque la Température de Demi-vie à une minute est comprise entre 160°C et 170°C telle que mesurée dans le n-dodécane à la concentration de 0,1 mole par litre (mol.l⁻¹).

De préférence, la Température de Demi-vie à une minute dudit premier initiateur est comprise entre 140°C et 180°C, de préférence entre 150°C et 170°C, et encore préférentiellement entre 155°C et 165°C.

De préférence, la Température de Demi-vie à une minute dudit second initiateur est comprise entre 150°C et 185°C, de préférence entre 155°C et 175°C, et encore préférentiellement entre 160°C et 170°C.

Ainsi, la demanderesse a testé le 1,1-di(tert-amyl peroxy)-cyclohexane (Luperox® 531M60), le 1,1-di(tert-butylperoxy)-3,3,5-trimethylcyclohexane (Luperox® 231M50) et le 1,1-di(tert-butylperoxy)-cyclohexane (Luperox® 331M50) qui présentent des Températures de Demi-vie à une minute respectivement de 150°C, 153°C et 155°C. Les résultats d'association de l'un de ces peroxydes avec par exemple le 2,2-(di-tert-amylperoxy)-butane (Luperox® 520M50) sont bons - un effet « booster » de productivité est clairement observé - mais moins bons que lorsque les deux diperketals associés présentent tous les deux une Température de Demi-vie à une minute comprise entre 160°C et 170°C.

On notera ici que les trois peroxydes diperketals susvisés comportent un cycle carboné central de sorte que, pour ces composants, les groupes R₄ et R₅ de la formule (I) sont liés de manière à former ledit cycle.

De la même manière, il a été observé par la demanderesse que pour le ethyl 3,3-di(tert-butylperoxy)-butyrate (Luperox® 233M50) et le ethyl 3,3-di(tert-amylperoxy)-butyrate (Luperox® 533M65), présentant respectivement une Température de Demi-vie à une minute de 175°C et 173°C, l'association avec par exemple le 2,2-(di-tert-amylperoxy)-butane (Luperox® 520M50) donnent de bons résultats - un effet « booster » de productivité est clairement observé - mais moins bons que lorsque les deux diperketals associés présentent tous les deux une Température de Demi-vie à une minute comprise entre 160°C et 170°C.

Enfin, on notera que la demanderesse a essayé l'association du n-butyl-4,4-di(tert-butylperoxy)-valerate (Luperox® 230), présentant une Température de Demi-vie à une minute de 163°C, avec le 2,2-(di-tert-amylperoxy)-butane (Luperox® 520M50). Les résultats observés sont satisfaisants, autrement dit un effet « booster » de productivité est observé, mais le n-butyl-4,4-di(tert-butylperoxy)-valerate dégage une quantité de dioxyde de carbone (CO₂) importante et susceptible dans une application industrielle d'être contreproductif ou problématique par l'introduction d'un gaz inerte venant diminuer la pression partielle en éthylène monomère. Ainsi, de manière générale, les peroxydes organiques présentant une fonction ester, à l'instar du Luperox® 230, ne sont a priori pas retenus dans le cadre de la présente invention non pas en raison de l'absence d'effet « booster » mais à cause de leur dégagement nuisible de CO₂.

La demanderesse a également découvert un perfectionnement très significatif de l'invention lorsque les deux peroxydes organiques utilisés diffèrent structurellement l'un de l'autre d'un seul carbone, au niveau des groupes centraux R₄ ou R₅. Ceci est présenté dans la suite avec le couple 2,2-(di-tert-amylperoxy)-butane (Luperox® 520M50) et 2,2-(di-tert-amylperoxy)-propane (dans tous les exemples ci-après, dilué à 50% massique dans l'isododécane), mais cette relation d'efficacité a été vérifiée en laboratoire avec d'autres couples de peroxydes organiques diperketals.

Cette relation structurelle particulièrement intéressante entre les deux diperketals est établie lorsque le groupe R₄ ou R₅ du premier initiateur diffère du groupe correspondant, respectivement R₄ ou R₅ du second initiateur, d'un seul carbone.

On notera que cette faible différence de structure moléculaire ne laissait absolument pas prévoir l'efficacité de conversion (capacité du peroxyde à amorcer un certain nombre de chaînes polymères par réaction d'initiation du monomère) nettement supérieure.

D'autres caractéristiques ou modes de réalisation de l'invention sont présentées ci-après :
- de préférence, les groupes R₄ et R₅ sont des groupes alkyles en C1-C10 substitués ou non, linéaires, ramifiés ou cycliques, de préférence C1-C6 substitués ou non, linéaires, ramifiés ou cycliques.
- de préférence, au moins 1, de préférence au moins 2, de préférence au moins 3, de préférence au moins 4, de préférence au moins 5, de préférence au moins 6, des groupes R₂ à R7 sont des groupes alkyles en C1-C6 substitués ou non, linéaires, ramifiés ou cycliques.

- de préférence, au moins 1, de préférence au moins 2, de préférence au moins 3, de préférence au moins 4, de préférence au moins 5, de préférence au moins 6, des groupes R₂ à R₇ sont linéaires.
- de préférence, au moins 1, de préférence au moins 2, de préférence au moins 3, de préférence au moins 4, de préférence au moins 5, de préférence au moins 6, des groupes R₂ à R₇ sont non substitués.
- de préférence, au moins 1, de préférence au moins 2, de préférence au moins 3, de préférence au moins 4, de préférence au moins 5, de préférence au moins 6, des groupes R₂ à R₇ sont linéaires et non substitués.
- avantageusement, les groupes R₂, R₃, R₆ et R₇ des deux susdits initiateurs consistent chacun en un groupe méthyle,
- de préférence le groupe R₄ consiste en un groupe méthyle.
- de préférence les groupes R₂, R₃, R₄, R₆ et R₇ consistent chacun en un groupe méthyle.
- selon un aspect préféré de l'invention, les groupes R₁ et R₈ des deux susdits initiateurs consistent chacun en un groupe alkyle en C2-C5, de préférence en C2-C4.
- selon un autre aspect avantageux de l'invention, le groupe R5 des deux susdits initiateurs représente un groupe alkyle en C1-C2.
- selon une solution préférée offerte par l'invention, le premier initiateur de polymérisation est le 2,2-di(tert-amylperoxy)-butane.
- de la même manière, selon une solution préférée offerte par l'invention, le second initiateur de polymérisation est le 2,2-di(tert-amylperoxy)-propane.
- de préférence, ledit le premier initiateur de polymérisation est le 2,2-di(tert-amylperoxy)-butane et ledit second initiateur de polymérisation est le 2,2-di(tert-amylperoxy)-propane.
- avantageusement, le mélange/la proportion des deux peroxydes diperketals/initiateurs présente une part du second initiateur comprise entre 2% et 50% molaire (l'ensemble des deux peroxydes perkétals représentant 100% du mélange), de préférence entre 10% et 40% molaire, encore préférentiellement entre 15 et 35% molaire.
- de préférence la proportion totale desdits premier et second initiateurs est comprise entre 1 et 10000 ppm, de préférence entre 10 et 1000 ppm, encore préférentiellement entre 50 et 150 ppm en poids par rapport au poids de polyéthylène ou de copolymère d'éthylène final.

Ledit premier et second initiateurs peuvent être ajoutés au mélange réactionnel ensemble ou séparément.

De préférence, lesdits premier et second initiateurs sont ajoutés ensemble, et de préférence ils forment un mélange de peroxydes.

La polymérisation ou copolymérisation peut être effectuée en présence en outre d'au moins un initiateur peroxydique additionnel. De préférence, ledit au moins un initiateur peroxydique additionnel n'est pas un composé de formule (I).

En particulier, ledit au moins un initiateur peroxydique additionnel n'est pas un diperketal selon la définition de la revendication indépendante de la présente demande de brevet.

Cet initiateur peroxydique additionnel peut être choisi dans le groupe constitué par : le tertiobutylperoxyneodécanoate, le tertiobutylperoxypivalate, le tertioamylperoxypivalate, le di (3,5,5 triméthylhexanoyl) peroxyde, le dilauroyl peroxyde, le didécanoyl peroxyde, le tertioamyl peroxy-2-éthylhexanoate, le tertiobutyl peroxy-2-éthylhexanoate, le tertiobutyl peroxy-3,5,5-triméthylhexanoate, le tertioamyl peroxy-3,5,5-triméthylhexanoate, tertiobutyl peroxybenzoate, le tertiobutylperoxyacetate, le ditertiobutylperoxyde et le ditertioamyl peroxyde.

La polymérisation ou copolymérisation peut être effectuée en présence d'au moins un additif, de préférence choisi dans le groupe constitué par : les antioxydants ; les agents de protection UV ; les agents de mise en oeuvre, ayant pour fonction d'améliorer l'aspect final lors de sa mise en oeuvre, telles que les amides grasses, l'acide stéarique et ses sels, l'éthylène bis-stéaramide ou les polymères fluorés ; les agents anti-buée ; les agents anti-bloquants tels que la silice ou le talc ; les charges telles que le carbonate de calcium et les nanocharges comme par exemple les argiles ; les agents de couplage tels que les silanes ; les agents réticulants comme les peroxydes ; les agents antistatiques ; les agents nucléants ; les pigments ; les colorants ; les plastifiants ; les fluidifiants et les additifs retardateurs de flamme tels que les hydroxydes d'aluminium ou de magnésium.

Ces additifs sont généralement utilisés dans des teneurs comprises entre 10 ppm et 100 000 ppm en poids par rapport au poids de polyéthylène ou de copolymère d'éthylène final. En particulier, les plastifiants, les fluidifiants et les additifs retardateurs de flamme peuvent atteindre des quantités bien supérieures à 10 000 ppm.

Outre les résultats de productivité améliorée, le procédé selon l'invention présente par ailleurs un grand nombre d'avantages dont une liste non exhaustive est donnée ci-dessous :
- facilité de mise en oeuvre par simple ajout du couple de peroxydes pouvant être introduit en une seule formulation à la formulation/dilution des amorceurs ;
- les peroxydes organiques utilisés dans le cadre de l'invention sont des peroxydes de la même famille (diperketals), donc présentant le même avantage de moindre production de CO₂ (gaz inerte nuisant à la conversion de l'éthylène, par effet de remplacement), et une conversion plus élevée qu'avec les peresters ;
- une moindre consommation spécifique du premier peroxyde diperketal utilisé (le principal) non compromise par l'ajout du second peroxyde diperketal (éventuellement désigné par le terme de « booster »), au contraire, l'ajout du second peroxyde diperketal permet de réduire les quantités utilisés des deux peroxydes, de l'ordre de 5 à 10% (par rapport à l'utilisation du seul premier peroxyde diperketal) ;
- une compatibilité avec les technologies de polymérisation sous haute pression existantes, autrement dit aucune adaptation du matériel ou du procédé autoclave ou tubulaire actuel n'est requise pour la mise en oeuvre du procédé selon l'invention.

### Description détaillée de l'invention

La polymérisation ou copolymérisation se fait à une pression variant de 500 à 3500 bar, de préférence de 500 à 3000 bar, de préférence de 1200 à 3000 bar, encore préférentiellement de 1200 à 2600 bar.

La polymérisation à haute pression est généralement effectuée en réacteur autoclave ou tubulaire. La température de réaction est généralement comprise entre 100°C et 330°C, de préférence entre 120°C et 300°C et encore préférentiellement entre 140°C et 200°C.

Lorsqu'un réacteur tubulaire est utilisé, l'introduction du mélange de l'éthylène et du ou des comonomères éventuels est effectuée de préférence en tête du réacteur tubulaire. De préférence, l'initiateur ou le mélange d'initiateurs est injecté à l'aide d'une pompe haute pression en tête du réacteur, après l'endroit d'introduction du mélange de l'éthylène et du ou des comonomères éventuels.

Le mélange de l'éthylène et du ou des comonomères éventuels peut être injecté en au moins un autre point du réacteur, cette injection peut être elle-même suivie d'une nouvelle injection d'initiateur ou d'un mélange d'initiateurs, on parle alors de technique d'injection multipoint. Lorsque la technique d'injection multipoint est utilisée, le mélange est préférentiellement injecté de manière telle que le rapport pondéral du mélange injecté en entrée de réacteur sur la totalité du mélange injecté est compris entre 10 et 90%.

D'autres procédés de polymérisation ou copolymérisation haute pression tubulaire utilisables sont par exemple ceux décrits dans US2006/0149004 A1 ou dans US2007/0032614 A1.

On peut également utiliser un réacteur autoclave pour réaliser la polymérisation haute pression radicalaire.

Un réacteur autoclave consiste généralement en un réacteur cylindrique dans lesquels est placé un agitateur. Le réacteur peut être séparé en plusieurs zones reliées entre elles en série. Avantageusement, le temps de séjour dans le réacteur est compris entre 30 et 120 secondes. Préférentiellement le rapport longueur/diamètre du réacteur est compris entre 3 et 25. L'éthylène seul et le ou les comonomères éventuels sont injectés dans la première zone du réacteur à une température comprise entre 50 et 120°C. Un initiateur est également injecté dans cette première zone réactionnelle lorsque la zone réactionnelle atteint une température comprise entre 150 et 200°C. Au cours de la réaction, la température peut être comprise entre 150 et 320°C, car la réaction est exothermique. Si le réacteur est un réacteur multizones, le flux d'éthylène et de comonomères éventuels n'ayant pas réagi ainsi que le polymère formé passent alors dans les zones réactionnelles suivantes. Dans chaque zone réactionnelle, de l'éthylène, des comonomères éventuels et des initiateurs peuvent être injectés, à une température d'initiation comprise entre 140 et 200°C. La température des zones après l'initiation est comprise entre 140 et 320°C. La pression du réacteur varie entre 500 et 3500 bar, de préférence entre 500 à 3000 bars, préférentiellement de 1200 à 3000 bars, et encore préférentiellement de 1200 à 2600 bars.

L'invention est illustrée par les exemples et expérimentations non limitatifs qui suivent.

Dans la suite, il faut noter que dans des expérimentations et essais ci-après, deux cas de figure sont à distinguer drastiquement. Premièrement, le cas d'un système d'amorçage mono-peroxyde et mélange binaire de peroxydes associés selon l'invention et deuxièmement, le cas d'un mélange ternaire de peroxydes, en raison de leur température d'initiation distincte conduisant à des performances et en particulier à des consommations spécifiques différentes.

Les systèmes d'amorçage ternaires incorporant des peroxydes très réactifs tels que le tert-butyl peroxypivalate (connu sous la forme commerciale Luperox® 11M75) et le tert-butyl peroxy-2-ethylhexanoate (connu sous la forme commerciale Luperox® 26) sont décomposés thermiquement à température plus basse que des systèmes d'amorçage de type diperketals seuls selon l'invention.

Il est connu de l'homme de l'art que l'emploi de tels peroxydes réactifs se fait au prix d'une consommation en peroxydes plus élevée, même si leur usage permet par ailleurs d'atteindre des grades de résines/polymères différents. Par conséquent, les performances individuelles des systèmes initiateurs diperketals testés à une température initiale proche de 180°C d'une part - exemples 1 à 4 - et peresters + perkétals testés à une température proche de 145°C d'autre part - exemples 5 à 8 - ne peuvent être comparées entre eux de façon croisée mais uniquement dans les mêmes conditions expérimentales.

Ainsi, pour être conforme à l'invention, les résultats, dans le cadre d'un système binaire (de peroxydes), avec température initiale ∼180°C et P = 1800 bars, doivent être les suivants :
- température maximale atteinte : cette dernière doit (pour être conforme à l'invention) être supérieure à 250°C ;
- temps d'atteinte de la température maximale : pour être conforme à l'invention, inférieure ou égale à 21 s ;
- conversion : pour être conforme à l'invention, supérieure à 10 % ;
- Consommation spécifique en peroxyde(s) pur(s) globale pour être conforme à l'invention, inférieure à 0,18 g de peroxyde(s) consommés/kg de résine produite.

Dans le cadre d'un système ternaire (de peroxydes) placé à une température initiale de 145°C, 1800 bars, les résultats doivent alors être les suivants :
- température maximale atteinte : cette dernière doit (pour être conforme à l'invention) être supérieure à 235°C ;
- temps d'atteinte de la température maximale : pour être conforme à l'invention, inférieure à 19 s ;
- conversion : pour être conforme à l'invention, supérieure à 11 % ;
- Consommation spécifique en peroxyde(s) pur(s) globale pour être conforme à l'invention, inférieure à 0,32 g/kg.

Par souci de concision et de simplicité, il doit être noté que seules une parties des expérimentations et essais menés par la demanderesse sont présentés ci-après. Néanmoins, il est bien entendu que la demanderesse a mené toutes les expérimentations et essais lui permettant de définir l'invention telle que revendiquée dans sa généralité comme dans ses précisions et tient ses données à disposition, si besoin.

### Exemple 1 :

L'exemple 1 permet une comparaison de la cinétique de polymérisation de l'éthylène avec soit le 2,2-(di-tert-amylperoxy)-propane soit le 2,2-(di-tert-amylperoxy)-butane (Luperox® 520M50).

Dans un réacteur agité haute pression de type autoclave de 435 ml (millilitre), l'éthylène est injecté jusqu'à atteindre une pression de 1800 bars. La température de paroi du réacteur est fixée à 180°C à l'aide de crayons chauffants placés dans les parois du réacteur. L'agitation est de 1000 tr/min (tours par minute).

La température du milieu réactionnel dans le réacteur est mesurée à l'aide de deux thermocouples.

Les divers flux (peroxyde + heptane + propanaldehyde) sont mélangés en amont du réacteur à basse température (25°C) afin de ne pas initier la réaction avant l'entrée dans le réacteur préalablement chargé avec l'éthylène.

Le 2,2-(di-tert-amylperoxy)-propane (4,3 mg correspondant à une concentration de 2,26 ppm molaire relative au contenu du global du réacteur comprenant une charge d'éthylène de 216,62g) ou bien le 2,2-(di-tert-amylperoxy)-butane (Luperox® 520M50) (4,6 mg soit 2,26 ppm molaire) est dilué dans l'heptane et le propanaldehyde (0,654 gramme d'heptane, solvant diluant d'injection et 0,502 gramme de propanaldehyde, agent de transfert) et injecté dans le réacteur à l'aide d'une pompe haute pression. La polymérisation est déclenchée dès l'injection du peroxyde à une température initiale de 180°C (température d'initiation).

Le temps de l'expérience est de 20 minutes pour ce réacteur non refroidi.

En sortie du réacteur le mélange éthylène / polyéthylène est détendu directement à trois bars et le polymère est séparé de l'éthylène n'ayant pas réagi par passage dans un pot de récupération.

La quantité de polymère récupérée après polymérisation est déterminée par pesée ce qui permet d'exprimer conversion (nombre de grammes de résine produite par nombre de grammes de monomère(s) engagé(s)), et consommation spécifique en peroxyde(s).

Dans cet exemple, les résultats suivants ont été enregistrés.

Pour le 2,2-(di-tert-amylperoxy)-propane (dilué à 50% massique dans l'isododécane), on obtient :
Température maximale atteinte : 284°C
Temps d'atteinte de la température maximale : 26 s (seconde)
Conversion : 15,84%

La consommation spécifique ou « CS » est exprimée en peroxyde pur, en g / kg (gramme par kilogramme) de LDPE (« Low Density PolyEthylene ») obtenu = 0,126 g /kg PE.
Quantité de polyéthylène basse densité LDPE produite : 34,5 g

Pour le 2,2-(di-tert-amylperoxy)-butane dilué à 50% massique dans l'isododécane (Luperox® 520M50), on obtient :
Température maximale atteinte : 256°C
Temps d'atteinte de la température maximale : 15 s
Conversion : 11,95%
CS = 0,176g/kg
Quantité LDPE produite : 26,05 g

Selon cet exemple 1, un dosage équimolaire de chacun des deux diperketals Luperox® 520M50 et 2,2-(di-tert-amylperoxy)-propane et par conséquent équi-(oxygène actif) conduit à constater une plus grande conversion et une plus faible consommation spécifique lorsque le 2,2-(di-tert-amylperoxy)-propane est utilisé à la place de Luperox® 520M50.

Cependant la cinétique de réaction avec le 2,2-(di-tert-amylperoxy)-propane est beaucoup plus lente comme l'indique le temps d'atteinte de Tₘₐₓ qui est augmenté de plus de 40%, ce qui en application industrielle tube ou autoclave serait extrêmement pénalisant.

### Exemple 2 :

Cet exemple est selon l'invention.

Dans cet exemple, il s'agit de tester un mélange de 2,2-(di-tert-amylperoxy)-butane(Luperox® 520M50) et de 2,2-(di-tert-amylperoxy)-propane.

La procédure décrite dans l'exemple 1 est reproduite avec le 2,2-(di-tert-amylperoxy)-butane (Luperox® 520M50) sauf que l'on remplace une proportion d'environ 30% molaire de ce peroxyde par du 2,2-(di-tert-amylperoxy)-propane.

Plus précisément, 1,59 ppm (partie par million) molaire de Luperox® 520M50, 0,7 ppm molaire de diperketal 2,2-(di-tert-amylperoxy)-propane (ppm molaire exprimé en peroxyde pur pour chacun des deux perkétals) sont mélangés, soit 3,2 mg de Luperox® 520M50 et 1,3mg de 2,2-(di-tertamyl peroxy)-propane.

Les résultats observés sont les suivants :
Temperature maximale atteinte : 260°C
Temps d'atteinte de la température maximale : 19 s
Conversion : 13,13%
CS = 0,159g/kg
Quantité LDPE produite : 28,45 g

La substitution d'environ 30% molaire de Luperox® 520M50 (exprimé en pur) par du diperketal 2,2-(di-tert-amylperoxy)-propane (exprimé en pur) permet d'augmenter la conversion par Luperox® 520M50 d'environ 2% tandis que l'atteinte de la Tₘₐₓ reste rapide, ce qui permet une production améliorée d'environ 9% (28,45 g au lieu de 26,05 g).

L'association Luperox® 520 / 2,2-(di-tert-amylperoxy)-propane permet à la fois une plus haute conversion et une consommation spécifique inférieure d'environ 10% à celle de Luperox® 520M50 seul, sans retarder notablement le pic de plus haute exothermicité comme observé avec le diperketal 2,2-(di-tert-amylperoxy)-propane seul.

### Exemple 3 :

Cet exemple est également selon l'invention.

Dans cet exemple, il s'agit de tester un mélange binaire avec le perkétal 2,2-(di-tert-amylperoxy)-butane (Luperox® 520M50) et un di-perkétal 2,2-di(-tert-butylperoxy)-butane (Luperox® 220M50).

Cet exemple met en évidence en particulier le fait que tous les perkétals de structure (I) et de HLT (« Half Life Temperature » ou Température de Demi-vie T) à une (1) minute proche de Luperox® 520M50 ne sont pas d'aussi bons « boosters » du Luperox® 520M50 que le diperketal 2,2-(di-tert-amylperoxy)-propane en particulier, même si l'effet « booster » est effectivement présent.

La procédure décrite dans l'exemple 1 est reproduite avec 2,2-(di-tert-amylperoxy)-butane (Luperox® 520M50) sauf que l'on remplace une proportion de ce peroxyde par du 2,2-di(-tert-butylperoxy)-butane (Luperox® 220M50).

Plus précisément, 1,52 ppm molaire de Luperox® 520M50 et 0,66 ppm molaire de Luperox® 220M50 sont mélangés pour former un ensemble homogène.

Les résultats observés sont présentés ci-dessous :
Temperature maximale atteinte : 261°C
Temps d'atteinte de la température maximale : 21s
Conversion : 12,1%
CS = 0,163 g/kg
Quantité LDPE produite : 26,3 g

### Exemple 4 :

Cet exemple de mélange de peroxyde n'est pas conforme à l'invention.

Dans cet exemple, il s'agit de tester un mélange binaire avec le perester tert-butylperoxy-3,5,5-trimethylhexanoate, ou Luperox® 270, (en association avec le Luperox® 520M50) mauvais « Booster » malgré une HLT à 1 minute équivalente à celle du diperketal 2,2-(di-tert-amylperoxy)-propane de 165°C.

La procédure décrite dans l'exemple 1 est reproduite avec le 2,2-(di-tert-amylperoxy)-butane (Luperox® 520M50) sauf que l'on remplace une proportion molaire plus élevée que dans l'exemple 3 (environ 47% molaire) de ce peroxyde Luperox® 520M50, par du tert-butylperoxy-3,5,5-trimethylhexanoate (Luperox® 270), en raison de la monofonctionalité peroxydique du Luperox® 270.

Plus précisément, 1,49 ppm molaire de Luperox® 520M50 et 1,34 ppm molaire de Luperox® 270 sont mélangés pour former un ensemble homogène.

Cette synthèse montre en particulier que, malgré la forte proportion de peroxyde tert-butylperoxy-3,5,5-trimethylhexanoate (Luperox® 270), la température maximale, la conversion et la consommation spécifique atteintes sont dégradées par rapport au mélange à 30% de 2,2-(di-tert-amylperoxy)-propane dans 2,2-(di-tert-amylperoxy)-butane (Luperox® 520M50) de l'exemple 2.

Les résultats observés sont notés ci-dessous :
Temperature maximale atteinte : 255°C
Temps d'atteinte de la température maximale : 19 s
Conversion : 11,92%
CS = 0,209 g/kg
Quantité LDPE produite : 26 g

### Exemple 5 :

Cet exemple de mélange de peroxydes n'est pas conforme à l'invention.

Dans cet exemple, il s'agit de la production de LDPE selon la procédure décrite dans l'exemple 1 reproduite avec un cocktail/mélange ternaire de peresters Luperox® 11M75 / Luperox® 26 / Luperox® 270 (tert-butyl peroxypivalate / tert-butyl peroxy-2-ethylhexanoate / tert-butyl peroxy-3,5,5-trimethylhexanoate) dans le rapport molaire visé respectif 20*/56 /24, (* exprimé en tert-butyl peroxypivalate pur), à deux concentrations globales en peroxydes, l'une permettant d'atteindre Tₘₐₓ autour de 240°C, l'autre permettant d'atteindre Tₘₐₓ autour de 250°C, avec une température d'amorçage de 145°C.

Les essais ont été conduits sur le même réacteur batch que pour l'exemple 1, chargé d'éthylène à 1800 bars mais régulé à la température d'initiation de 145°C au lieu de 180°C en raison de la présence des peresters réactifs Luperox® 11M75 (le tert-butyl peroxypivalate est dilué à 75% dans l'isododécane) et Luperox® 26.

Les résultats (cas avec Tₘₐₓ autour de 240°C, ratio molaire 19/57/23 tel que défini au début de l'exemple) observés sont les suivants :
Total ppm poids 78,36 (peroxydes purs)
Temperature maximale atteinte : 239°C
Temps d'atteinte de la température maximale : 13,5s
Conversion : 11%
CS globale en peroxydes purs =0,678 g/kg
Quantité LDPE produite : 24,5 g

Les résultats (cas avec Tₘₐₓ autour de 250°C ratio molaire 20/56/24 tel que défini au début de l'exemple) observés sont les suivants :
Total ppm poids 126,18 (peroxydes purs engagés)
Temperature maximale atteinte : 249°C
Temps d'atteinte de la température maximale : 14,7s
Conversion : 12,29%
CS globale en peroxydes purs =0,967 g/kg
Quantité LDPE produite : 27,7 g

Ces polymérisations montrent des atteintes de Tₘₐₓ rapides inférieure à 15 secondes, des conversions classiques pour cet équipement et cette composition molaire 20/56/24 de ternaire peroxydique, mais des consommations spécifiques très élevées.

### Exemple 6 :

Cet exemple de mélange de peroxyde n'est pas conforme à l'invention.

Dans cet exemple, il s'agit de la production de LDPE selon la procédure décrite dans l'exemple 1 mais avec un cocktail/mélange ternaire de peresters et de diperketal, soit du Luperox® 11M75 / Luperox® 26 / Luperox® 520M50 (tert-butyl peroxypivalate / tert-butyl peroxy-2-ethylhexanoate / 2,2-(di-tert-amyl)butane) dans le rapport molaire ciblé autour de 23 (pur) / 65/12 (diperketal pur), à deux concentrations globales en peroxydes, l'une permettant d'atteindre Tₘₐₓ autour de 240°C, l'autre permettant d'atteindre Tₘₐₓ autour de 250°C, avec une température d'amorçage de 145°C.

Les résultats (cas avec Tₘₐₓ autour de 240°C ratio molaire 22/66/12 tel que défini au début de l'exemple) observés sont les suivants :
Total ppm poids 45,88 (peroxyde purs engagés)
Temperature maximale atteinte : 240°C
Temps d'atteinte de la température maximale : 16s
Conversion : 14,10%
CS globale en peroxydes purs =0,325 g/kg
Quantité LDPE produite : 31,7 g

Les résultats (cas avec Tₘₐₓ autour de 250°C ratio molaire 23/65/12 tel que défini au début de l'exemple) observés sont les suivants :
Total ppm poids 77,91 (peroxydes purs engagés)
Temperature maximale atteinte : 254°C
Temps d'atteinte de la température maximale : 13,5s
Conversion : 14,91%
CS globale en peroxydes purs =0,523 g/kg
Quantité LDPE produite : 33,5 g

Ces polymérisations réalisées avec mélange peroxydique ternaire ayant vu son peroxyde haute température Luperox® 270 remplacé par le diperketal Luperox® 520 montrent toujours des atteintes de Tₘₐₓ courtes de l'ordre de 15 secondes, mais des conversions améliorées pour des consommations spécifiques pratiquement divisées par 2.

### Exemple 7 :

Cet exemple de mélange de peroxyde n'est pas conforme à l'invention.

Dans cet exemple, il s'agit de la production de LDPE selon la procédure décrite dans l'exemple 1 mais avec un cocktail/mélange ternaire de peresters et de diperketal, soit du Luperox® 11M75 / Luperox® 26/diperketal 2,2-(di-tert-amylperoxy)-propane dans le rapport molaire 23(pur) / 65 / 12 (exprimé en diperketal pur) à deux concentrations globales en peroxydes, l'une permettant d'atteindre Tₘₐₓ autour de 240°C, l'autre permettant d'atteindre Tₘₐₓ autour de 250°C, avec une température d'amorçage de 145°C

Les résultats (cas avec Tₘₐₓ autour de 240°C ratio molaire 23/65/12 tel que défini au début de l'exemple) observés sont les suivants :
Total ppm poids 31,51 (peroxyde purs engagés)
Temperature maximale atteinte : 238°C
Temps d'atteinte de la température maximale : 22,7s
Conversion : 13,44%
CS globale en peroxydes purs =0,234 g/kg
Quantité LDPE produite : 30,2 g

Les résultats (cas avec Tₘₐₓ autour de 250°C ratio molaire 23/65/12 tel que défini au début de l'exemple) observés sont les suivants :
Total ppm poids 41,23 (peroxydes purs engagés)
Temperature maximale atteinte : 246°C
Temps d'atteinte de la température maximale : 20,5s
Conversion : 14,50%
CS globale en peroxydes purs =0,284 g/kg
Quantité LDPE produite : 32,5 g

Ces polymérisations réalisées avec un mélange peroxydique dans lequel le peroxyde de haute température Luperox® 270 est remplacé par le diperketal 2,2-(di-tert-amylperoxy)-propane montrent toujours des Tₘₐₓ de même niveau mais atteintes avec retard d'au moins cinq secondes par rapport aux synthèses de l'exemple 5 ou bien avec Luperox® 520 de l'exemple 6, et ce, malgré une bonne réactivité telle que vue par les taux de conversions comparables à ceux obtenus avec Luperox® 520 (de l'exemple 6) ainsi que des consommations spécifiques encore améliorées par rapport à ceux de l'exemple 6.

Les diperketals selon l'invention permettent de meilleures conversions, notamment par rapport au perester Luperox® 270, mais tous les diperketals ne réagissent pas aussi vite. Ainsi, le Luperox® 520 est bien plus rapide que le diperketal 2,2-(di-tert-amylperoxy)-propane malgré une structure moléculaire et une température de décomposition HLT à 1 minute très proche.

### Exemple 8 :

Cet exemple de mélange de peroxydes n'est pas conforme à l'invention.

Dans cet exemple, il s'agit de la production de LDPE selon la procédure décrite dans l'exemple 1 mais avec un cocktail/mélange ternaire de peresters et de diperketal, soit du Luperox® 11M75 / Luperox® 26 / Luperox® 220M50 dans le rapport molaire 23 (pur)/64/13 (diperketal pur) à deux concentrations globales en peroxydes, l'une permettant d'atteindre Tₘₐₓ autour de 240°C, l'autre permettant d'atteindre Tₘₐₓ autour de 250°C, avec une température d'amorçage de 145°C)

Les résultats (cas avec Tₘₐₓ autour de 240°C ratio molaire 23/64/13 tel que défini au début de l'exemple) observés sont les suivants :
Total ppm poids 41,77(peroxyde purs engagés)
Temperature maximale atteinte : 244°C
Temps d'atteinte de la température maximale : 19,2s
Conversion : 13,81%
CS globale en peroxydes purs =0,353g/kg
Quantité LDPE produite : 31,1 g

Les résultats (cas avec Tₘₐₓ autour de 250°C ratio molaire 23/64/13 tel que défini au début de l'exemple) observés sont les suivants :
Total ppm poids 58,14 (peroxydes purs engagés)
Temperature maximale atteinte : 259°C
Temps d'atteinte de la température maximale : 18,5s
Conversion : 15,71%
CS globale en peroxydes purs =0,434 g/kg
Quantité LDPE produite : 35,4 g

Ces polymérisations réalisées avec mélange peroxydique ternaire dans lequel le peroxyde de haute température Luperox® 270 est remplacé par le diperketal Luperox® 220M50 montrent à nouveau la supériorité en conversion et en consommation spécifique de l'emploi d'un diperketal, mais comme pour l'exemple 7, le temps d'atteinte du Tₘₐₓ reste plus long que lorsque le Luperox® 520M50 est choisi comme diperketal du mélange ternaire (exemple 6) alors que la structure moléculaire et la HLT à 1 minute du Luperox® 220M50 sont, là encore, proches de celles du Luperox® 520M50.

D'après les exemples 5, 6, 7 il apparaît que le diperketalperketal 2,2-(di-tert-amylperoxy)-propane ne permet pas de remplacer le Luperox® 270 usuel en raison du déplacement trop important de la Tₘₐₓ qui passe de 15 secondes environ à plus de 20 secondes, malgré une consommation spécifique globalement abaissée de 65% environ. Seul le Luperox® 520M50 permet de substituer le perester Luperox® 270 avec un bénéfice à la fois sur la conversion et avec un abaissement encore considérable d'environ 50% de la consommation spécifique en peroxydes du cocktail ternaire, sans dégrader la cinétique. Mais la demanderesse montre ainsi par l'exemple 7 que l'usage du diperketalperketal 2,2-(di-tert-amylperoxy)-propane comme seul diperketal pour la gamme haute température réactionnelle 140-290°C n'est pas possible et que l'invention doit de préférence comprendre une majorité de Luperox® 520M50 afin de permettre une productivité optimale (conversion élevée en un temps réactionnel court).

### Exemple 9 :

Exemple de mélange de peroxydes selon l'invention, utilisé dans un cocktail d'initiateurs.

Une polymérisation de LDPE a été réalisée selon la procédure décrite à l'exemple 1, mais sur la base d'un cocktail d'amorceurs Luperox® 11M75 / Luperox® 26 / Luperox® 520M50 (tert-butyl peroxypivalate / tert-butyl peroxy-2-ethylhexanoate / diperketal 2,2-(di-tert-amylperoxy)-butane) afin de la comparer à une polymérisation réalisée sur la même base d'amorceurs mais pour laquelle une partie du Luperox® 520M50 a été remplacé par du 2,2-(di-tert-amylperoxy)-propane

### Exemple 9a :

Pour référence de cet exemple, la production de LDPE a été réalisée suivant la procédure décrite dans l'exemple 1, avec un cocktail/mélange ternaire de peresters et de diperketal, précisément du Luperox® 11M75 / Luperox® 26 / Luperox® 520M50 (tert-butyl peroxypivalate / tert-butyl peroxy-2-ethylhexanoate / diperketal 2,2-(di-tert-amylperoxy)butane) dans le rapport molaire 23,1 (pur) / 65,1 / 11,8 (exprimé en diperketal pur), à une concentration globale en peroxydes permettant d'atteindre Tₘₐₓ autour de 250°C, avec une température d'amorçage de 145°C.

### Polymérisation référence de l'exemple 9:

Les résultats observés sont les suivants :
Total ppm poids 48,4 (peroxydes purs engagés)
Température maximale atteinte : 250°C
Temps d'atteinte de la température maximale : 14s
Conversion : 15,32%
CS globale en peroxydes purs =0,316 g/kg
Quantité LDPE produite : 34,5 g

Cette polymérisation a ensuite été comparée à celle réalisée avec le cocktail de peroxydes décrit dans l'exemple suivant :

### Exemple 9b :

Polymérisation selon l'invention de l'exemple 9: polymérisation avec cocktail de peroxydes comme pour la référence de l'exemple 9, mais pour lequel un tiers molaire environ de perketal 2,2-(di-tert-amylperoxy)-butane a été remplacé par un tiers molaire environ deperketal 2,2-(di-tert-amylperoxy)-propane :
La procédure décrite dans l'exemple 1 est reproduite avec la composition du cocktail injecté suivante : Luperox® 11M75 / Luperox® 26 / Luperox® 520M50 (tert-butyl peroxypivalate / tert-butyl peroxy-2-ethylhexanoate / 2,2-(di-tert-amylperoxy)butane)/ 2,2-(di-tert-amylperoxy)propane) dans le rapport molaire 23 (pur)/65,4/8 /3,6 respectivement, les deux derniers peroxydes di perkétals étant exprimés en pur alors qu'engagés sous forme de dilution à 50% dans l'iso-dodécane.

Les résultats observés sont les suivants :
Total ppm poids 51,55 (peroxydes purs engagés)
Température maximale atteinte : 251°C
Temps d'atteinte de la température maximale : 13,5s
Conversion : 16,83%
CS globale en peroxydes purs =0,306 g/kg
Quantité LDPE produite : 37,9 g

L'exemple 9b montre que l'usage du 2,2-(di-tert-amylperoxy)-propane en remplacement d'un tiers molaire environ du 2,2-(di-tert-amylperoxy)-butane dans une polymérisation amorcée par un cocktail ternaire composé de peresters et d'un initiateur peroxydique diperketal à haute productivité tel que 2,2-(di-tert-amylperoxy)-butane) permet d'accroître la conversion de plus de , 1,5%, et ce avec une cinétique conservée, alors que l'exemple 7 montre que la substitution totale du 2,2-(di-tert-amylperoxy)-butane par 2,2-(di-tert-amylperoxy)-propane conduit à un allongement de la réaction de polymérisation inacceptable en production. L'exemple 9b illustre donc l'intérêt d'introduire une proportion non majoritaire de perketal 2,2-(di-tert-amylperoxy)-propane avec le diperketal 2,2-(di-tert-amylperoxy)-butane dans un cocktail d'initiateurs à composantes perester et diperketal.

### Exemple 9c :

Polymérisation selon l'invention de l'exemple 9: polymérisation avec cocktail de peroxydes comme pour la référence de l'exemple 9, mais pour lequel 12% molaire environ de perketal 2,2-(di-tert-amylperoxy)-butane a été remplacé par 12% molaire environ de diperketal 2,2-(di-tert-amylperoxy)-propane :
La procédure décrite dans l'exemple 1 est reproduite avec le cocktail suivant: Luperox® 11/ Luperox® 26/ diperketal 2,2-(di-tert-amylperoxy)-butane/ diperketal 2,2-(di-tert-amylperoxy)-propane dans le rapport molaire 22,8 (pur) / 64,7 / 11 /1,5 respectivement, les deux derniers peroxydes di perkétals étant exprimés en pur alors qu'engagés sous forme de dilution à 50% dans l'isododécane.

Les résultats observés sont les suivants :
Total ppm poids 60,23 (peroxydes purs engagés)
Température maximale atteinte : 249°C
Temps d'atteinte de la température maximale : 14s
Conversion : 15,81 %
CS globale en peroxydes purs =0,311 g/kg
Quantité LDPE produite : 35,6 g

L'exemple 9c montre à nouveau l'intérêt d'introduire une proportion non majoritaire de diperketal 2,2-(di-tert-amylperoxy)-propane avec le diperketal 2,2-(di-tert-amylperoxy)-butane dans un cocktail d'initiateurs à composantes perester et diperketal.

Bien que le gain en conversion et en production de résine soit inférieur à celui montré par l'exemple 9b, l'exemple 9c avec 12% au lieu d'environ 30% molaire de 2,2-(di-tert-amylperoxy)-propane utilisé conjointement au 2,2-(di-tert-amylperoxy)-butane permet encore un gain de conversion de l'ordre d'un demi pour cent de conversion.

## Revendications

1. Procédé de fabrication de polyéthylène ou d'un copolymère de l'éthylène, comprenant une étape de polymérisation ou copolymérisation radicalaire de l'éthylène en présence :
- d'un premier initiateur de polymérisation peroxydique choisi parmi les composés peroxydes diperketals de formule : 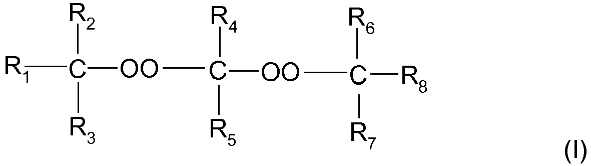 où les groupes R₁, R₂, R₃, R₆, R₇ et R₈ consistent en des groupes alkyles en C1-C10, substitué ou non, linéaire, ramifié ou cyclique,
- d'un second initiateur, différent dudit premier initiateur, consistant également en un peroxyde diperketal de formule (I).

2. Procédé selon la revendication 1, **caractérisé en ce que** la Température de Demi-vie à une minute dudit premier initiateur est comprise entre 140°C et 180°C, de préférence entre 150°C et 170°C, et encore préférentiellement entre 155°C et 165°C.

3. Procédé selon la revendication 1 ou 2, **caractérisé en ce que** la Température de Demi-vie à une minute dudit second initiateur est comprise entre 150°C et 185°C, de préférence entre 155°C et 175°C, et encore préférentiellement entre 160°C et 170°C.

4. Procédé selon l'une quelconque des revendications précédentes, **caractérisé en ce que** l'étape de polymérisation ou copolymérisation radicalaire est réalisée à une pression variant entre 500 et 3500 bar, de préférence entre 1200 et 3000 bar, encore préférentiellement de 1200 à 2600 bar.

5. Procédé selon l'une quelconque des revendications précédentes, **caractérisé en ce que** l'étape de polymérisation ou copolymérisation radicalaire est réalisée à une température comprise entre 100°C et 330°C, de préférence entre 120°C et 300°C et encore préférentiellement entre 140°C et 200°C.

6. Procédé selon l'une quelconque des revendications précédentes, **caractérisé en ce que** le groupe R₄ ou R₅ du premier initiateur diffère du groupe correspondant, respectivement R₄ ou R₅ du second initiateur, d'un seul carbone.

7. Procédé selon l'une quelconque des revendications précédentes, **caractérisé en ce que** les groupes R₄ et R₅ sont des groupes alkyles en C1-C6.

8. Procédé selon l'une quelconque des revendications précédentes, **caractérisé en ce que** les groupes R₂, R₃, R₆ et R₇ des deux susdits initiateurs consistent chacun un groupe méthyle, de préférence également le groupe R₄.

9. Procédé selon l'une quelconque des revendications précédentes, **caractérisé en ce que** les groupes R₁ et R₈ des deux susdits initiateurs consistent chacun en un groupe alkyle en C2-C5, de préférence en C2-C4.

10. Procédé selon l'une quelconque des revendications précédentes **caractérisé en ce que** le groupe R5 des deux susdits initiateurs représente un groupe alkyle en C1-C2.

11. Procédé selon l'une quelconque des revendications précédentes, **caractérisé en ce que** le premier initiateur est le 2,2-di(tertio-amylperoxy)butane.

12. Procédé selon l'une quelconque des revendications précédentes, **caractérisé en ce que** le second initiateur est le 2,2-di(tertio-amylperoxy)propane.

13. Procédé selon l'une quelconque des revendications précédentes, **caractérisé en ce que** le mélange des deux peroxydes diperketals présente une part du second initiateur comprise entre 2% et 50% molaire, de préférence entre 10% et 40% molaire, encore préférentiellement entre 15 et 35% molaire.

14. Procédé selon l'une quelconque des revendications précédentes **caractérisé en ce que** la polymérisation ou copolymérisation est effectuée en présence en outre d'un ou plusieurs initiateur(s) peroxydique(s) additionnel(s).

15. Procédé selon l'une quelconque des revendications précédentes **caractérisé en ce que** la polymérisation ou copolymérisation est effectuée en présence d'au moins un additif choisi dans le groupe constitué par : les antioxydants ; les agents de protection UV ; les agents de mise en oeuvre ; les agents anti-buée ; les agents anti-bloquants ; les charges ; les agents de couplage ; les agents réticulants ; les agents antistatiques ; les agents nucléants ; les pigments ; les colorants ; les plastifiants ; les fluidifiants et les additifs retardateurs de flamme.

## Patentansprüche

1. Verfahren zur Herstellung von Polyethylen oder einem Ethylen-Copolymer, umfassend einen Schritt der radikalischen Polymerisation bzw. Copolymerisation von Ethylen in Gegenwart:
- eines ersten Peroxid-Polymerisationsinitiators, ausgewählt aus den Diperketalperoxidverbindungen der Formel: 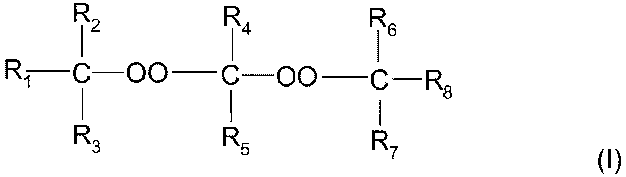 wobei die Gruppen R₁, R₂, R₃, R₆, R₇ und R₈ aus substituierten oder unsubstituierten, linearen, verzweigten oder cyclischen C1-C10-Alkylgruppen bestehen,
- eines zweiten Initiators, der von dem ersten Initiator verschieden ist und ebenfalls aus einem Diperketalperoxid der Formel (I) besteht.

2. Verfahren nach Anspruch 1, **dadurch gekennzeichnet, dass** die 1-Minuten-Halbwertszeit-Temperatur des ersten Initiators zwischen 140 °C und 180 °C, vorzugsweise zwischen 150 °C und 170 °C und noch weiter bevorzugt zwischen 155 °C und 165 °C liegt.

3. Verfahren nach Anspruch 1 oder 2, **dadurch gekennzeichnet, dass** die 1-Minuten-Halbwertszeit-Temperatur des zweiten Initiators zwischen 150 °C und 185 °C, vorzugsweise zwischen 155 °C und 175 °C und noch weiter bevorzugt zwischen 160 °C und 170 °C liegt.

4. Verfahren nach einem der vorhergehenden Ansprüche, **dadurch gekennzeichnet, dass** der Schritt der radikalischen Polymerisation bzw. Copolymerisation bei einem Druck zwischen 500 und 3500 bar, vorzugsweise zwischen 1200 und 3000 bar, noch weiter bevorzugt von 1200 bis 2600 bar, durchgeführt wird.

5. Verfahren nach einem der vorhergehenden Ansprüche, **dadurch gekennzeichnet, dass** der Schritt der radikalischen Polymerisation bzw. Copolymerisation bei einer Temperatur zwischen 100 °C und 330 °C, vorzugsweise zwischen 120 °C und 300 °C und noch weiter bevorzugt zwischen 140 °C und 200 °C, durchgeführt wird.

6. Verfahren nach einem der vorhergehenden Ansprüche, **dadurch gekennzeichnet, dass** sich die Gruppe R₄ oder R₅ des ersten Initiators von der entsprechenden Gruppe R₄ bzw. R₅ des zweiten Initiators um ein einziges Kohlenstoffatom unterscheidet.

7. Verfahren nach einem der vorhergehenden Ansprüche, **dadurch gekennzeichnet, dass** die Gruppen R₄ und R₅ für C1-C6-Alkylgruppen stehen.

8. Verfahren nach einem der vorhergehenden Ansprüche, **dadurch gekennzeichnet, dass** die Gruppen R₂, R₃, R₆ und R₇ der beiden obigen Initiatoren jeweils aus einer Methylgruppe bestehen, vorzugsweise auch die Gruppe R₄.

9. Verfahren nach einem der vorhergehenden Ansprüche, **dadurch gekennzeichnet, dass** die Gruppen R₁ und R₈ der beiden obigen Initiatoren jeweils aus einer C2-C5- und vorzugsweise C2-C4-Alkylgruppe bestehen.

10. Verfahren nach einem der vorhergehenden Ansprüche, **dadurch gekennzeichnet, dass** die Gruppe R5 der beiden obigen Initiatoren für eine C1-C2-Alkylgruppe steht.

11. Verfahren nach einem der vorhergehenden Ansprüche, **dadurch gekennzeichnet, dass** es sich bei dem ersten Initiator um 2,2-Di(tert-amylperoxy)butan handelt.

12. Verfahren nach einem der vorhergehenden Ansprüche, **dadurch gekennzeichnet, dass** es sich bei dem zweiten Initiator um 2,2-Di(tert-amylperoxy)propan handelt.

13. Verfahren nach einem der vorhergehenden Ansprüche, **dadurch gekennzeichnet, dass** die Mischung der beiden Diperketalperoxide einen Anteil des zweiten Initiators zwischen 2 und 50 Mol-%, vorzugsweise zwischen 10 und 40 Mol-%, noch weiter bevorzugt zwischen 15 und 35 Mol-%, aufweist.

14. Verfahren nach einem der vorhergehenden Ansprüche, **dadurch gekennzeichnet, dass** die Polymerisation bzw. Copolymerisation außerdem in Gegenwart eines oder mehrerer zusätzlicher Peroxid-Initiatoren durchgeführt wird.

15. Verfahren nach einem der vorhergehenden Ansprüche, **dadurch gekennzeichnet, dass** die Polymerisation bzw. Copolymerisation in Gegenwart mindestens eines Additivs aus der Gruppe bestehend aus Antioxidantien; UV-Schutzmitteln; Verarbeitungshilfsmitteln; Antischleiermitteln; Antiblockmitteln; Füllstoffen; Kupplungsmitteln; Vernetzungsmitteln; Antistatika; Nukleierungsmitteln; Pigmenten; Farbmitteln; Weichmachern; Fließmitteln und Flammschutzadditiven durchgeführt wird.

## Claims

1. Process for manufacturing polyethylene or an ethylene copolymer, comprising a step of radical polymerization or copolymerization of ethylene in the presence:
- of a first peroxide polymerization initiator chosen from the diperketal peroxide compounds of formula: 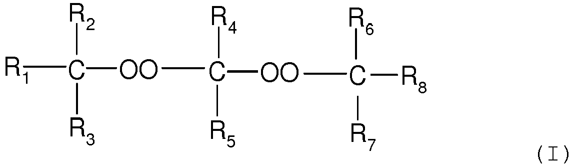 in which the R₁, R₂, R₃, R₆, R₇ and R₈ groups consist of substituted or unsubstituted, linear, branched or cyclic C1-C10 alkyl groups,
- of a second initiator, other than said first initiator, also consisting of a diperketal peroxide of formula (I).

2. Process according to Claim 1, **characterized in that** the one minute half-life temperature of said first initiator is between 140°C and 180°C, preferably between 150°C and 170°C, and even more preferentially between 155°C and 165°C.

3. Process according to Claim 1 or 2, **characterized in that** the one minute half-life temperature of said second initiator is between 150°C and 185°C, preferably between 155°C and 175°C, and even more preferentially between 160°C and 170°C.

4. Process according to any one of the preceding claims, **characterized in that** the step of radical polymerization or copolymerization is carried out at a pressure varying between 500 and 3500 bar, preferably between 1200 and 3000 bar, even more preferentially from 1200 to 2600 bar.

5. Process according to any one of the preceding claims, **characterized in that** the step of radical polymerization or copolymerization is carried out at a temperature of between 100°C and 330°C, preferably between 120°C and 300°C and even more preferentially between 140°C and 200°C.

6. Process according to any one of the preceding claims, **characterized in that** the group R₄ or R₅ of the first initiator differs from the corresponding group, respectively R₄ or R₅, of the second initiator, by a single carbon.

7. Process according to any one of the preceding claims, **characterized in that** the groups R₄ and R₅ are C1-C6 alkyl groups.

8. Process according to any one of the preceding claims, **characterized in that** the groups R₂, R₃, R₆ and R₇ of the two abovementioned initiators each consist of a methyl group, preferably also the group R₄.

9. Process according to any one of the preceding claims, **characterized in that** the groups R₁ and R₈ of the two abovementioned initiators each consist of a C2-C5, preferably C2-C4, alkyl group.

10. Process according to any one of the preceding claims, **characterized in that** the group R5 of the two abovementioned initiators represents a C1-C2 alkyl group.

11. Process according to any one of the preceding claims, **characterized in that** the first initiator is 2,2-di(tert-amylperoxy)butane.

12. Process according to any one of the preceding claims, **characterized in that** the second initiator is 2,2-di(tert-amylperoxy)propane.

13. Process according to any one of the preceding claims, **characterized in that** the mixture of the two diperketal peroxides has a share of the second initiator of between 2 and 50 mol%, preferably between 10 and 40 mol%, even more preferentially of between 15 and 35 mol%.

14. Process according to any one of the preceding claims, **characterized in that** the polymerization or copolymerization is carried out also in the presence of one or more additional peroxide initiator(s).

15. Process according to any one of the preceding claims, **characterized in that** the polymerization or copolymerization is carried out in the presence of at least one additive selected from the group consisting of: antioxidants; UV protection agents; processing agents; antifogging agents; antiblocking agents; fillers; coupling agents; crosslinking agents; antistatic agents; nucleating agents; pigments; dyes; plasticizers; fluidizers and flame-retardant additives.
